# EUROPEAN PATENT APPLICATION

(11) **EP 4 768 462 A1**
(43) Date of publication of application: **01.07.2026**
(21) Application number: 24855234.1
(22) Date of filing: 29.02.2024
(51) Int. Cl.: C04B 35/83

(54) **BRAKE DISC AND PREPARATION METHOD, BRAKE SYSTEM, AND VEHICLE**

(30) Priority: 24.08.2023 CN 202311088529
(71) Applicant: BYD Company Limited, Guangdong 518118 (CN)
(72) Inventor: LIN, Xinping, Shenzhen, Guangdong 518118 (CN); YANG, Qingping, Shenzhen, Guangdong 518118 (CN); JIANG, Pinyi, Shenzhen, Guangdong 518118 (CN); ZHAO, Shun, Shenzhen, Guangdong 518118 (CN)
(74) Representative: Mathys & Squire
(86) International application number: PCT/CN2024/079331
(87) International publication number: WO 2025/039503

(57) **Abstract**

A brake disc and a preparation method, a brake system, and a vehicle. The brake disc comprises a dense region and a plurality of nanoporous regions distributed at intervals in the dense region, wherein the dense region comprises a carbon fiber reinforced silicon carbide material, and the nanoporous region comprises cracked carbon in a continuous phase and carbon particles distributed in the cracked carbon, wherein the pore size of the nanoporous region ranges from 10 nm to 100 nm, and the porosity ranges from 15% to 30%.

## Description

This application claims priority to Chinese Patent Application No. 202311088529.9, filed with the China National Intellectual Property Administration on August 24, 2023 and entitled "BRAKE DISC, MANUFACTURING METHOD THEREFOR, BRAKING SYSTEM, AND TRANSPORTATION MEANS", which is incorporated herein by reference in its entirety.

### TECHNICAL FIELD

This application relates to the field of brake material technology, specifically to a brake disc, a manufacturing method therefor, a braking system, and a transportation means.

### BACKGROUND

Carbon ceramic brake discs have gradually gained popularity in the market due to their superior performance. The material of the carbon ceramic brake disc generally includes carbon fiber-reinforced silicon carbide/elemental silicon, where carbon fiber provides toughness and silicon carbide provides abrasion resistance. The continuous phase formed by the two brittle materials, silicon carbide and free silicon, tends to generate cracks under external forces. The generated cracks may further extend to the interface between the carbon fiber and a continuous phase material, leading to long cracks in the brake disc. Under long-term alternating load, through-thickness cracks may be formed in the brake disc, resulting in breaking of the brake disc and severely affecting service life of the carbon ceramic brake disc.

### SUMMARY

In view of this, this application provides a brake disc. A nanoporous area in the brake disc can improve toughness of the brake disc, so that service life of the carbon ceramic brake disc can be prolonged.

A first aspect of this application provides a brake disc, including a dense area and a plurality of nanoporous areas spaced apart in the dense area. The dense area includes a carbon fiber-reinforced silicon carbide material. The nanoporous area includes pyrolytic carbon in a continuous phase and carbon particles distributed in the pyrolytic carbon. A pore size of a nanopore of the nanoporous area ranges from 10 nm to 100 nm, and porosity of the nanoporous area ranges from 15% to 30%.

A nanoporous structure of the nanoporous area makes the nanoporous area more porous at nanoscale than the dense area. In addition, an interfacial bonding force between the pyrolytic carbon and the carbon particles is weaker. When the brake disc is subject to external forces, cracks are generated in the dense area, and the cracks extend to the nanoporous area and extend along an interface of the pyrolytic carbon/interfaces of the carbon particles in the nanoporous area. This extension process is also an energy absorption process of the cracks. Therefore, the cracks gradually disappear. In this way, toughness of the brake disc can be significantly improved, and service life of the brake disc can be prolonged.

In an implementation, a size of the nanoporous area ranges from 30 µm to 500 µm.

In an implementation, based on a volume of the brake disc, a sum of volume percentages of the plurality of nanoporous areas ranges from 5% to 30%.

In an implementation, based on total mass of the nanoporous area, the nanoporous area includes 30% to 70% carbon particles, 10% to 40% pyrolytic carbon, and 0% to 50% silicon carbide particles.

In an implementation, a mass percentage of the silicon carbide particles in the nanoporous area ranges from 5% to 50%.

In an implementation, a particle size of the carbon particle ranges from 0.1 µm to 10 µm.

In an implementation, a D50 particle size of the carbon particle ranges from 0.3 µm to 10 µm.

In an implementation, a D50 particle size of the silicon carbide particle ranges from 0.3 µm to 20 µm.

In an implementation, porosity of the brake disc ranges from 1% to 5%.

A second aspect of this application provides a manufacturing method for a brake disc, including the following steps:
(1) immersing a carbon fiber tow in a solution of first resin, taking out the carbon fiber tow, and drying, curing, and cutting the carbon fiber tow, to obtain carbon fiber-reinforced resin strips;
(2) heating and pressurizing a first raw material including carbon particles and second resin powder in a mold for curing, and then crushing and sieving the first raw material to obtain a granular second raw material;
(3) mixing, heating, and stirring the carbon fiber-reinforced resin strips, the second raw material, third resin powder, and a solvent until the solvent volatilizes, to obtain a mixture; and crushing and sieving the mixture, transferring the mixture to a mold, and heating and pressurizing the mixture for curing, to obtain a brake disc blank, where the brake disc blank includes a first material distribution area and a plurality of second material distribution areas spaced apart in the first material distribution area, the first material distribution area includes the carbon fiber-reinforced resin strips and the third resin powder, and the second material distribution area includes the second raw material and the third resin powder; and
(4) performing a carbonization treatment on the brake disc blank under a protective atmosphere, and performing a siliconizing treatment, to obtain the brake disc.

The brake disc includes a dense area and a plurality of nanoporous areas spaced apart in the dense area. The dense area includes a carbon fiber-reinforced silicon carbide material. The nanoporous area includes pyrolytic carbon in a continuous phase and carbon particles distributed in the pyrolytic carbon. A pore size of the nanoporous area ranges from 10 nm to 100 nm, and porosity of the nanoporous area ranges from 15% to 30%. The manufacturing method has simple steps, strong process reliability, and high production efficiency, so that large-scale industrial production can be implemented.

In an implementation, based on total mass of the mixture, the mixture includes 20% to 50% carbon fiber-reinforced resin strips, 20% to 40% second raw material, and 20% to 40% third resin powder.

In an implementation, a length of the carbon fiber-reinforced resin strip ranges from 0.5 cm to 3 cm.

In an implementation, based on total mass of the first raw material, the first raw material includes 30% to 60% carbon particles, 20% to 50% second resin powder, and 0% to 40% silicon carbide particles.

In an implementation, in step (2), sieving is performed by using a sieve with 50 to 400 meshes.

In an implementation, in step (3), sieving is performed by using a sieve with 15 to 30 meshes.

A third aspect of this application provides a braking system, including the brake disc provided in the first aspect of this application. Because the carbon ceramic brake disc provided in the first aspect of this application is used, the braking system has good braking effects, high reliability, and longer service life.

In an implementation, the braking system includes the carbon ceramic brake disc, a brake caliper bracket, a brake caliper housing, and a friction plate.

A fourth aspect of this application provides a transportation means, including the braking system provided in the third aspect of this application. Because the transportation means has the braking system provided in the third aspect of this application, the transportation means has good market competitiveness.

In an implementation, the transportation means includes a vehicle or an airplane, and the vehicle includes an automobile or a rail transit train.

### BRIEF DESCRIPTION OF DRAWINGS

FIG. 1 is a simplified diagram of a structure of any area on any cross section of a brake disc according to an embodiment of this application; and
FIG. 2 is a scanning electron microscope (scanning electron microscope, SEM) image of a cross section of a brake disc obtained in Example 2 of this application.

Reference numerals: 1: brake disc; 10: dense area; 20: nanoporous area.

### DESCRIPTION OF EMBODIMENTS

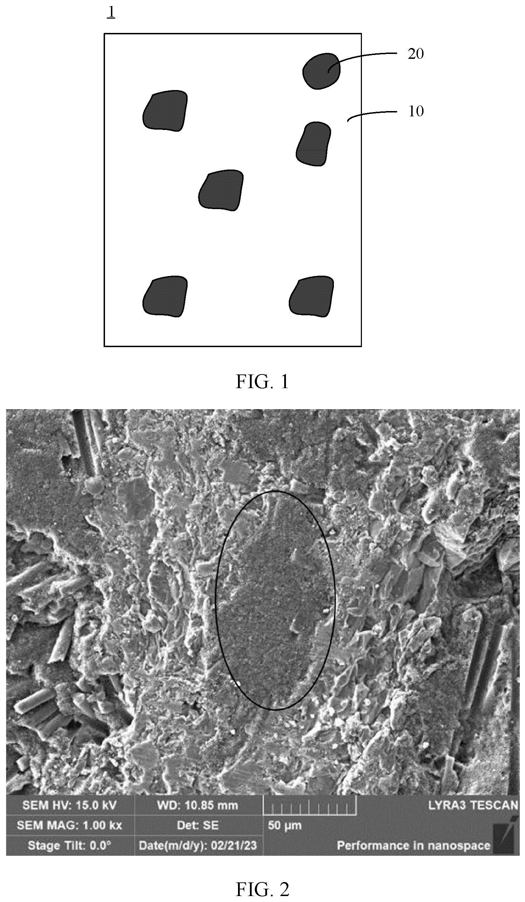

Generally, a carbon ceramic brake disc is directly obtained through a siliconization reaction of carbon fiber/porous carbon. The obtained carbon ceramic brake disc is entirely of a nano-dense structure, which has high brittleness and lacks toughness. After prolonged use, through-thickness cracks are likely to appear, resulting in breaking of the carbon ceramic brake disc and severely affecting service life of the carbon ceramic brake disc. To resolve the foregoing technical problem, embodiments of this application provide a brake disc. FIG. 1 is a simplified diagram of a structure of any area on any cross section of a brake disc according to an embodiment of this application. As shown in FIG. 1, the brake disc 1 includes a dense area 10 and a plurality of nanoporous areas 20 spaced apart in the dense area 10. Specifically, in some implementations, the nanoporous area 20 is surrounded by the dense area 10.

The dense area 10 includes a carbon fiber-reinforced silicon carbide material. The nanoporous area 20 includes pyrolytic carbon in a continuous phase and carbon particles distributed in the pyrolytic carbon. A pore size of the nanoporous area 20 ranges from 10 nm to 100 nm, and porosity of the nanoporous area ranges from 15% to 30%. Specifically, the dense area 10 includes a continuous phase of the silicon carbide material and a carbon fiber reinforcement distributed in the continuous phase. The pore size means a pore size of a nanopore in the nanoporous area 20.

Carbon fiber in the dense area can provide specific toughness for the brake disc. However, based on a use characteristic of the brake disc, a large amount of silicon carbide is needed to serve as the continuous phase in the dense area. As a result, the dense area of the brake disc is still dominated by brittleness and lacks toughness. In addition, a nanoporous structure distributed in the nanoporous area of the dense area makes the nanoporous area more porous at nanoscale than the dense area. Furthermore, materials of the nanoporous area are mainly the pyrolytic carbon and the carbon particles, and an interfacial bonding force between the two materials is weak. When a braking system is started, a friction plate in the braking system clamps the brake disc, so that the brake disc and the friction plate engage against each other to implement braking. After the foregoing process is repeated for a plurality of times, cracks are generated in the dense area of the brake disc. In the brake disc provided in this application, after the cracks are generated, the cracks extend to the nanoporous area and extend along an interface of the pyrolytic carbon/interfaces of carbon particles in the nanoporous area. In the foregoing process, energy of the cracks is gradually absorbed by the nanoporous structure of the nanoporous area. Therefore, the cracks generated in the dense area gradually disappear. In this way, toughness of the brake disc can be significantly improved, and service life of the brake disc can be prolonged.

It will be further noted that the foregoing comparison between the nanoporous area and the dense area is based on the nanoscale. In the dense area, there may be pores with micrometer-scale pore sizes, which leads to a visual error that "the dense area appears more porous than the nanoporous area" in a SEM image of a cross section of a brake disc sample.

For example, the pore size of the nanoporous area may be 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, or the like. If the pore size of the nanoporous area is excessively small (less than 10 nm), energy cannot be effectively absorbed during crack extension and consequently a matrix fractures. If the pore size of the nanoporous area is excessively large, the cracks cannot extend and consequently the dense area fractures.

For example, the porosity of the nanoporous area may be 15%, 16%, 17%, 18%, 19%, 20%, 21%, 22%, 23%, 24%, 25%, 26%, 27%, 28%, 29%, 30%, or the like. If the porosity of the nanoporous area is excessively small, there will be insufficient porous areas to absorb energy of the cracks and consequently energy cannot be effectively absorbed. If the porosity of the nanoporous area is excessively large, the cracks cannot extend and consequently the dense area fractures.

In an implementation, a size of the nanoporous area ranges from 30 µm to 500 µm. Understandably, the nanoporous area is of a three-dimensional structure. A circular brake disc is taken as an example to describe the size of the nanoporous area: The disc-shaped brake disc includes an upper surface, a lower surface, and a side surface connecting the upper surface and the lower surface. If the brake disc is cut along any plane, a size of a nanoporous area in an obtained cross section of the brake disc ranges from 30 µm to 500 µm. For example, the size of the nanoporous area may be 30 µm, 40 µm, 50 µm, 60 µm, 80 µm, 100 µm, 120 µm, 150 µm, 180 µm, 200 µm, 220 µm, 250 µm, 280 µm, 300 µm, 320 µm, 350 µm, 380 µm, 400 µm, 420 µm, 450 µm, 480 µm, 490 µm, 500 µm, or the like. The size of the nanoporous area is controlled within the foregoing range, so that there can be a sufficiently large porous area at the nanoscale to absorb energy of the cracks, to fully improve toughness of the brake disc without affecting strength of the dense area. In this way, braking effects of the brake disc are ensured, and the service life of the brake disc is fully prolonged.

In an implementation, based on a total volume of the brake disc, a sum of volume percentages of the plurality of nanoporous areas ranges from 5% to 30%. That is, the sum of the volume percentages of all the nanoporous areas in the brake disc ranges from 5% to 30%. For example, the sum of the volume percentages of the nanoporous areas may be 5%, 8%, 10%, 12%, 15%, 18%, 20%, 22%, 25%, 28%, 30%, or the like. The sum of the volume percentages of the plurality of nanoporous areas in the brake disc is controlled within the foregoing range, so that there are sufficient nanoporous areas spaced apart in the dense area to absorb energy generated by cracks in different positions of the dense area under impact of external forces. This contributes to uniform performance in each position of the brake disc, to better and more comprehensively improve toughness of the brake disc without affecting abrasion resistance and strength of the brake disc.

In an implementation, the nanoporous structure of the nanoporous area is formed by a plurality of stacked carbon particles and the pyrolytic carbon. Specifically, the plurality of carbon particles are stacked on each other. Understandably, a gap is formed between adjacent carbon particles. The pyrolytic carbon is filled in the gap to form the continuous phase, so as to form the nanoporous structure.

In an implementation, a particle size of the carbon particle in the nanoporous area ranges from 0.1 µm to 10 µm. In some specific embodiments, a D50 particle size of the carbon particle in the nanoporous area ranges from 0.3 µm to 10 µm. Controlling the D50 particle size of the carbon particle within the foregoing range is conducive to controlling the pore size of the nanoporous structure within a smaller range, which is more conducive to absorption of energy of the cracks. For example, the particle size of the carbon particle in the nanoporous area may be 0.3 µm, 0.5 µm, 1.0 µm, 2.0 µm, 3.0 µm, 4.0 µm, 5.0 µm, 6.0 µm, 7.0 µm, 8.0 µm, 9.0 µm, 10.0 µm, or the like.

In an implementation, a material of the carbon particle in the nanoporous area includes but is not limited to at least one of microcrystalline carbon, graphite, coke, and chopped carbon fiber. For the chopped carbon fiber, the particle size means a length of the chopped carbon fiber. In some specific embodiments, the length of the chopped carbon fiber ranges from 14 µm and 60 µm. For example, the length of the chopped carbon fiber may be 15 µm, 20 µm, 25 µm, 30 µm, 35 µm, 40 µm, 45 µm, 50 µm, 55 µm, 60 µm, or the like.

In an implementation, the nanoporous area further includes silicon carbide particles. That is, the nanoporous area includes the carbon particles, the pyrolytic carbon, and the silicon carbide particles. In some specific implementations, in this case, the carbon particles and the silicon carbide particles in the nanoporous area are stacked on each other, and the pyrolytic carbon is filled in gaps formed by stacking of the carbon particles and the silicon carbide particles to form the continuous phase, so as to form the nanoporous structure. In this way, the nanoporous area can absorb energy of the cracks in the dense area and improve toughness of the brake disc.

In an implementation, a D50 particle size of the silicon carbide particle in the nanoporous area ranges from 0.3 µm to 20 µm. Controlling the D50 particle size of the silicon carbide particle within the foregoing range is conducive to controlling the pore size of the nanoporous structure within a smaller range, which is more conducive to absorption of energy of the cracks. For example, the D50 particle size of the silicon carbide particle in the nanoporous area may be 0.3 µm, 0.5 µm, 1.0 µm, 2.0 µm, 5.0 µm, 8.0 µm, 10.0 µm, 12.0 µm, 15.0 µm, 18.0 µm, 20.0 µm, or the like.

In an implementation, based on total mass of the nanoporous area, the nanoporous area includes 30% to 70% carbon particles, 10% to 40% pyrolytic carbon, and 0% to 50% silicon carbide particles. For example, a mass percentage of the carbon particles in the nanoporous area may be 30%, 35%, 40%, 45%, 50%, 55%, 60%, 65%, 70%, or the like; and a mass percentage of the pyrolytic carbon in the nanoporous area may be 10%, 15%, 20%, 25%, 30%, 35%, 40%, or the like. For example, a mass percentage of the silicon carbide particles in the nanoporous area may be 1%, 5%, 10%, 15%, 20%, 25%, 30%, 35%, 40%, 45%, 50%, or the like. In some specific implementations, the nanoporous area includes 30% to 70% carbon particles, 10% to 40% pyrolytic carbon, and 5% to 50% silicon carbide particles. The mass percentage of each of the foregoing substances is controlled within the foregoing range, so that the pore size and the porosity of the nanoporous structure of the nanoporous area can be controlled, and strength of the nanoporous area can also be considered. In this way, toughness of the brake disc can be improved, and high strength of the brake disc can be ensured.

In an implementation, a length of the carbon fiber in the dense area ranges from 1 cm to 2 cm. For example, the length of the carbon fiber in the dense area may be 1.0 cm, 1.1 cm, 1.2 cm, 1.3 cm, 1.4 cm, 1.5 cm, 1.6 cm, 1.7 cm, 1.8 cm, 1.9 cm, 2.0 cm, or the like. This ensures mechanical strength of the dense area. In this way, a risk of crack generation in the dense area can be reduced, so that braking effects of the brake disc are improved, and the service life of the brake disc is prolonged.

In an implementation, an edge area of the nanoporous area has silicon carbide in a continuous phase.

In an implementation, the dense area further includes free elemental silicon. Specifically, the elemental silicon and the silicon carbide in the dense area jointly form a continuous phase, and the carbon fiber is distributed in the continuous phase as a reinforcement.

In an implementation, porosity of the brake disc ranges from 1% to 5%. Understandably, there may be a micrometer-scale pore size in the dense area. Controlling the overall porosity of the brake disc within the foregoing range is conducive to absorption of the cracks in the dense area, so that mechanical performance of the dense area is ensured, and performance of the brake disc is improved. For example, the porosity of the brake disc may be 1.00%, 1.20%, 1.40%, 1.50%, 1.60%, 1.70%, 1.80%, 1.90%, 2.00%, 2.10%, 2.20%, 2.30%, 2.40%, 2.50%, 3.0%, 3.5%, 4.0 %, 4.5%, 5.0%, or the like.

Embodiments of this application further provide a manufacturing method for a brake disc, including the following steps.

S01: immerse a carbon fiber tow in a solution of first resin, take out the carbon fiber tow, and dry, cure, and cut the carbon fiber tow, to obtain carbon fiber-reinforced resin strips.

S02: heat and pressurize a first raw material including carbon particles and second resin powder in a mold for curing, and then crush and sieve the first raw material to obtain a granular second raw material. Understandably, in the first raw material, the carbon particles are stacked on each other, and the second resin powder is filled in gaps formed by stacking of the carbon particles. In some implementations of this application, the carbon particles and the second resin powder are mixed in a solid-phase mixing apparatus. In some specific embodiments, the carbon particles and the second resin powder are mixed in a V-type mixer.

It will be noted that S01 and S02 are only distinguished in terms of steps, not in terms of their order. During actual production, the carbon fiber-reinforced resin strips may be manufactured first, or the second raw material may be manufactured first; or the second raw material is manufactured first and then the carbon fiber-reinforced resin strips are manufactured; or the carbon fiber-reinforced resin strips and the second raw material are manufactured at the same time.

S03: mix, heat, and stir the carbon fiber-reinforced resin strips, the second raw material, third resin powder, and a solvent until the solvent volatilizes, to obtain a mixture; and crush and sieve the mixture, transfer the mixture to a mold, and heat and pressurize the mixture for curing, to obtain a brake disc blank, where the brake disc blank includes a first material distribution area and a plurality of second material distribution areas spaced apart in the first material distribution area, the first material distribution area includes the carbon fiber-reinforced resin strips and the third resin powder, and the second material distribution area includes the second raw material and the third resin powder.

S04: perform a carbonization treatment on the brake disc blank under a protective atmosphere, and perform a siliconizing treatment, to obtain the brake disc. It will be noted that, in the siliconizing treatment, due to a structural characteristic and a raw material characteristic of the second material distribution area, it is difficult for elemental silicon to penetrate into the second material distribution area. The carbonization treatment may convert the first resin, the second resin powder, and the third resin powder into pyrolytic carbon, and the siliconizing treatment may cause pyrolytic carbon in the first material distribution area to react with silicon and be converted into silicon carbide. In an implementation, elemental silicon may impregnate a raw material at an edge of the second material distribution area. As a result, the silicon carbide and/or the elemental silicon exist/exists in an edge area of the nanoporous area in the finally obtained brake disc.

The brake disc includes a dense area and a plurality of nanoporous areas spaced apart in the dense area. The dense area includes a carbon fiber-reinforced silicon carbide material. The nanoporous area includes pyrolytic carbon in a continuous phase and carbon particles distributed in the pyrolytic carbon. A pore size of the nanoporous area ranges from 10 nm to 100 nm, and porosity of the nanoporous area ranges from 15% to 30%.

In an implementation, the first resin, the second resin powder, and the third resin powder include but are not limited to phenolic resin. In a specific embodiment, the first resin, the second resin powder, and the third resin powder are thermoplastic phenolic resin.

In an implementation, in step S01, solid content of the solution of the first resin ranges from 40% to 60%. In some specific implementations, the solution of the first resin is a phenolic resin solution with solid content ranging from 40% to 60%.

In an implementation, in step S01, the carbon fiber tow impregnated with the solution of the first resin is dried at 50°C to 80°C, cured at 130°C to 160°C, and then cut into the carbon fiber-reinforced resin strips with lengths ranging from 0.5 cm to 3 cm. For example, a temperature for drying may be 50°C, 55°C, 60°C, 65°C, 70°C, 75°C, 80°C, or the like. For example, a temperature for curing may be 130°C, 140°C, 150°C, 160°C, or the like. For example, the length of the carbon fiber-reinforced resin strip may be 0.5 cm, 1.0 cm, 1.5 cm, 2.0 cm, 2.5 cm, 3.0 cm, or the like. Controlling the length of the carbon fiber-reinforced resin strip within the foregoing range facilitates mixing of the carbon fiber-reinforced resin strips, the second raw material, and the third resin powder.

In an implementation, in step S02, based on total mass of the first raw material, the first raw material includes 30% to 60% carbon particles, 20% to 50% second resin powder, and 0% to 40% silicon carbide particles. For example, mass content of the carbon particles in the first raw material may be 30%, 35%, 40%, 45%, 50%, 55%, 60%, or the like. For example, mass content of the second resin powder in the first raw material may be 20%, 25%, 30%, 35%, 40%, 45%, 50%, or the like. In some specific embodiments, the first raw material further includes the silicon carbide particles. In this case, based on the total mass of the first raw material, the first raw material includes 30% to 60% carbon particles, 20% to 50% second resin powder, and 10% to 40% silicon carbide particles. For example, a mass percentage of the silicon carbide particles in the first raw material may be 10%, 15%, 20%, 25%, 30%, 35%, 40%, or the like. The content of each of the foregoing substances is controlled within the foregoing range, so that toughness and strength of the nanoporous area of the brake disc can be appropriately regulated, and a high dynamic friction coefficient can be achieved. In this way, the brake disc has better performance.

In an implementation, in step S02, the first raw material is pressurized at 130°C to 160°C for curing, to obtain a blocky first raw material. For example, a temperature for pressurization and curing may be 130°C, 135°C, 140°C, 145°C, 150°C, 155°C, 160°C, or the like.

In an implementation, in step S02, after being crushed, the blocky first raw material is sieved by using a sieve with 50 to 400 meshes. For example, a quantity of the meshes of the sieve may be 50, 80, 100, 120, 150, 180, 200, 220, 250, 280, 300, 350, 380, 400, or the like. Controlling the quantity of the meshes of the sieve within the foregoing range is conducive to mixing of the second raw material, the carbon fiber-reinforced resin strips, and the third resin powder, which is conducive to regulation of subsequent distribution of the first material distribution area and the second material distribution area, to facilitate regulation of parameters of the nanoporous area of the brake disc.

In an implementation, in step S03, the second raw material, the carbon fiber-reinforced resin strips, the third resin powder, and the solvent are mixed, heated, and stirred, so that the solvent volatilizes completely, where a temperature for heating and stirring ranges from 50°C to 70°C. For example, the temperature for heating and stirring may be 50°C, 55°C, 60°C, 65°C, 70°C, or the like. In some implementations of this application, the solvent includes but is not limited to alcohol.

In an implementation, in step S03, based on total mass of the mixture, the mixture includes 20% to 50% carbon fiber-reinforced resin strips, 20% to 40% second raw material, and 20% to 40% third resin powder. For example, mass content of the carbon fiber-reinforced resin strips in the mixture may be 20%, 25%, 30%, 35%, 40%, 45%, 50%, or the like. For example, mass content of the second raw material in the mixture may be 20%, 25%, 30%, 35%, 40%, or the like. For example, mass content of the third resin powder in the mixture may be 20%, 25%, 30%, 35%, 40%, or the like. The mass content of the carbon fiber-reinforced resin strips, the second raw material, and the third resin powder is controlled within the foregoing range, so that a proportion of the nanoporous areas in the brake disc can be controlled within a suitable range. In this way, the brake disc has good toughness and good strength, so that the obtained brake disc has both good braking effects and long service life.

In an implementation, in step S03, after being crushed, the mixture is sieved by using a sieve with 15 to 30 meshes. In this way, a particle size of the material can be controlled within a suitable range, and a size of the second material partition in the brake disc blank can be controlled within a suitable range. Based on successful manufacture of the brake disc provided in this application, a size of the nanoporous area is controlled within a more suitable range, to ensure good overall performance of the brake disc.

In an implementation, in step S04, the brake disc blank is kept at a temperature of 800°C to 1200°C for 2 h to 6 h under the protective atmosphere. For example, the temperature may be maintained at 800°C, 850°C, 900°C, 950°C, 1000°C, 1050°C, 1100°C, 1050°C, 1200°C, or the like. For example, the temperature may be maintained for 2 h, 2.5 h, 3 h, 3.5 h, 4 h, 4.5 h, 5 h, 5.5 h, 6 h, or the like.

In an implementation, in step S04, the siliconizing treatment may be liquid-phase siliconizing treatment on the brake disc blank.

In an implementation, in step S04, after the siliconizing treatment, post-processing on the brake disc is further included, to obtain a brake disc that meets actual usage requirements. A process for the post-processing includes performing surface grinding on the brake disc.

Embodiments of this application further provide a braking system, including the brake disc provided in embodiments of this application. Because the carbon ceramic brake disc provided in this application is used, the braking system has good braking effects, high reliability, and longer service life.

In an implementation, the braking system includes the carbon ceramic brake disc, a brake caliper bracket, a brake caliper housing, and a friction plate.

Embodiments of this application provide a transportation means, including the braking system provided in this application. Because the transportation means has the braking system provided in this application, the transportation means has good market competitiveness.

In an implementation, the transportation means includes a vehicle or an airplane, and the vehicle includes an automobile or a rail transit train.

The technical solutions of this application are further described in detail below with reference to a plurality of embodiments.

### Example 1

(1) A 12K carbon fiber tow is immersed in a solution of first resin (specifically phenolic resin) with 50% solid content. The carbon fiber tow is taken out, dried at 80°C, cured in an environment of 150°C, and then cut into carbon fiber-reinforced resin strips with a length of 2 cm.
(2) Carbon particles (specifically graphite) and second resin powder (specifically phenolic resin) are uniformly mixed in a V-type mixer in a mass ratio of 50:50, to obtain a first raw material. The first raw material is transferred to a mold and pressurized at 150°C for curing, to obtain a blocky first raw material. Then, the blocky first raw material is crushed and sieved by using a sieve with 100 meshes, to obtain a second raw material.
(3) The carbon fiber-reinforced resin strips, the second raw material, and third resin powder are dispersed in a solvent (specifically alcohol) in a mass ratio of 40:30:30 and heated and stirred at 60°C for 1 h so that the solvent volatilized completely, to obtain a mixture. The mixture is crushed and sieved by using a sieve with 20 meshes. Then, the mixture is transferred to a mold and pressurized at 150°C for curing, to obtain a brake disc blank.
(4) The brake disc blank is kept at 1000°C for 4 h in a nitrogen atmosphere. Then, liquid-phase siliconization is performed on a carbonized brake disc blank. Finally, surface processing is performed, to obtain a brake disc. The brake disc includes a dense area and a plurality of nanoporous areas spaced apart in the dense area.

### Example 2

A difference between Example 2 and Example 1 lies in that in step (2), the first raw material includes the carbon particles, the second resin powder, and silicon carbide particles in a mass ratio of 30:50:20. A particle size of the silicon carbide particle is 0.5 µm.

### Example 3

A difference between Example 3 and Example 2 lies in that in step (2), the first raw material includes the carbon particles, the second resin powder, and the silicon carbide particles in a mass ratio of 60:20:20.

### Example 4

A difference between Example 4 and Example 2 lies in that in step (2), the first raw material includes the carbon particles, the second resin powder, and the silicon carbide particles in a mass ratio of 30:50:20.

### Example 5

A difference between Example 5 and Example 2 lies in that in step (2), the first raw material includes the carbon particles and the second resin powder in a mass ratio of 80:20.

### Example 6

A difference between Example 6 and Example 2 lies in that in step (2), the first raw material includes the carbon particles and the second resin powder in a mass ratio of 20:80.

### Example 7

A difference between Example 7 and Example 2 lies in that in step (3), the mixture includes the carbon fiber-reinforced resin strips, the second raw material, and the third resin powder in a mass ratio of 20:40:40.

### Example 8

A difference between Example 8 and Example 2 lies in that in step (3), the mixture includes the carbon fiber-reinforced resin strips, the second raw material, and the third resin powder in a mass ratio of 50:20:30.

### Example 9

A difference between Example 9 and Example 2 lies in that in step (3), the mixture includes the carbon fiber-reinforced resin strips, the second raw material, and the third resin powder in a mass ratio of 60:10:40.

### Example 10

A difference between Example 10 and Example 2 lies in that in step (3), the mixture includes the carbon fiber-reinforced resin strips, the second raw material, and the third resin powder in a mass ratio of 10:50:40.

### Example 11

A difference between Example 11 and Example 2 lies in that in step (3), after being crushed, the blocky first raw material is sieved by using a sieve with 500 meshes; and in step (3), the crushed mixture is sieved by using a sieve with 50 meshes.

### Example 12

A difference between Example 12 and Example 2 lies in that in step (3), after being crushed, the blocky first raw material is sieved by using a sieve with 30 meshes; and in step (3), the crushed mixture is sieved by using a sieve with 10 meshes.

To highlight the beneficial effects of embodiments of this application, the following comparative example is provided.

### Comparative Example 1

(1) 12K chopped carbon fiber with a length of 2 cm, phenolic resin powder, carbon powder, and silicon carbide powder are uniformly mixed, put into a mold, and pressurized for curing, to obtain a molded blank. A mass ratio of carbon fiber:phenolic resin: carbon powder: silicon carbide powder is 40:45:9:6.
(2) The molded blank is carbonized at a temperature of 1000°C for 4 h in a nitrogen atmosphere.
(3) Liquid-phase siliconization is performed on a carbonized blank, and processing is performed, to obtain a brake disc.

### Performance test

(1) Pretreatment is performed on a brake disc sample, to expose a cross section of the brake disc sample. A pore size of a nanoporous area of the brake disc is measured by using a SEM. FIG. 2 shows an SEM image of a cross section of a brake disc in Example 2.
(2) Density and open porosity of the brake disc are measured according to provisions of GB/T 1966.
(3) Bending strength of the brake disc is measured according to provisions of GB/T 6569.
(4) Interlaminar shear strength of the brake disc is measured according to provisions of ASTM D2344/D2344M-13.
(5) Compressive strength of the brake disc is measured according to provisions of GB/T 34559.
(6) Impact toughness of the brake disc is measured according to provisions of GB/T 14389.
(7) Thermal conductivity of the brake disc is tested by using a TC-3000 thermal constant measuring instrument according to provisions of GJB1201.1-91.
(8) A dynamic friction coefficient of the brake disc is tested by using an MM-1000 friction testing machine, where an effective friction surface of a test ring of the MM-1000 friction testing machine is: outer diameter D75 mm/inner diameter D55 mm×10 mm, specific pressure is 98 N/cm², a moment of inertia is 3 kgf·cm·s², and a linear velocity is 25 m/s.

**Table 1**

| Experiment number | Sum of volume percentages of nanoporous areas in a brake disc | Size range of the nanoporous area/µm | Average pore size of the nanoporous area/nm | Porosity of the nanoporous area | Density g/cm³ | Porosity of the brake disc |
|---|---|---|---|---|---|---|
| Example 1 | 10% | 70 to 150 | 45 | 18% | 2.19 | 1.05% |
| Example 2 | 8% | 70 to 150 | 37 | 20% | 2.23 | 0.79% |
| Example 3 | 15% | 100 to 180 | 41 | 23% | 2.15 | 1.86% |
| Example 4 | 15% | 100 to 180 | 38 | 19% | 2.10 | 0.79% |
| Example 5 | 25% | 200 to 350 | 52 | 27% | 2.35 | 2.0% |
| Example 6 | 20% | 200 to 350 | 55 | 29% | 2.40 | 2.5% |
| Example 7 | 14% | 150 to 240 | 43 | 19% | 2.20 | 1.02% |
| Example 8 | 10% | 100 to 180 | 39 | 21% | 2.15 | 0.99% |
| Example 9 | 16% | 100 to 180 | 46 | 25% | 2.06 | 1.06% |
| Example 10 | 30% | 250 to 400 | 34 | 20% | 2.36 | 0.56% |
| Example 11 | 28% | 250 to 400 | 33 | 22% | 2.12 | 0.78% |
| Example 12 | 15% | 150 to 240 | 50 | 18% | 2.33 | 1.33% |
| Comparative Example 1 | / | / | / | / | 2.17 | 1.03% |

**Table 2**

| Experiment number | Average pore size of a nanopor ous area/nm | Porosity of the nanop orous area/ % | Density g/cm³ | Porosity of a brake disc | Bending strength/MPa | Shear strength/MPa | Compressive strength/MPa | Impact toughness kJ/m² | Thermal conductivity W/(m·K) | Dynamic friction coefficient |
|---|---|---|---|---|---|---|---|---|---|---|
| Example 1 | 45 | 18 | 2.19 | 1.05% | 124.5 | 13.2 | 258.1 | 28.6 | 63.1 | 0.38 |
| Example 2 | 37 | 20 | 2.23 | 0.79% | 130.6 | 16.7 | 263.2 | 26.3 | 62.3 | 0.41 |
| Example 3 | 41 | 23 | 2.15 | 1.86% | 126.0 | 14.5 | 260.3 | 27.5 | 62.4 | 0.42 |
| Example 4 | 38 | 19 | 2.10 | 0.79% | 129.5 | 16.5 | 262.1 | 26.9 | 62.2 | 0.40 |
| Example 5 | 52 | 27 | 2.35 | 2.0% | 94.3 | 8.7 | 183.6 | 23.8 | 42.5 | 0.20 |
| Example 6 | 55 | 29 | 2.40 | 2.5% | 99.2 | 6.5 | 174.0 | 20.4 | 38.6 | 0.31 |
| Example 7 | 43 | 19 | 2.20 | 1.02% | 125.6 | 13.0 | 254.3 | 28.7 | 62.5 | 0.39 |
| Example 8 | 39 | 21 | 2.15 | 0.99% | 160.3 | 15.6 | 255.5 | 27.9 | 62.33 | 0.38 |
| Example 9 | 46 | 25 | 2.06 | 1.06% | 98.8 | 8.5 | 190.3 | 20.4 | 43.8 | 0.24 |
| Example 10 | 34 | 20 | 2.36 | 0.56% | 95.0 | 7.3 | 192.6 | 18.2 | 32.5 | 0.27 |
| Example 11 | 33 | 22 | 2.12 | 0.78% | 90.6 | 8.2 | 180.5 | 22.6 | 39.30 | 0.34 |
| Example 12 | 50 | 18 | 2.33 | 1.33% | 96.4 | 7.9 | 191.4 | 21.7 | 40.03 | 0.28 |
| Comparative Example 1 | / | / | 2.17 | 1.03% | 82.3 | 9.3 | 224.7 | 13.8 | 59.9 | 0.40 |

It can be seen from the parameters in Table 1 and Table 2 that the impact toughness and the bending strength of brake discs provided in embodiments of this application are significantly higher than those of the brake disc in the comparative example, and the parameters such as the compressive strength, the shear strength, the thermal conductivity, and the dynamic friction coefficient of the brake discs provided in embodiments also meet usage requirements.

In addition, through comparison between the data of Example 1 and the data of Example 5, it can be found that when a mass ratio of the carbon powder to the second resin powder in the first raw material is within a range further suggested in this application, performance of the obtained brake disc is better. Through comparison between the data of Example 1 and the data of Example 2 to Example 4, it is easy to find that when the first raw material further includes silicon carbide and content of each raw material is within a range further suggested in this application, mechanical strength and the dynamic friction coefficient of the brake disc are better. Through comparison between the data of Example 7 and Example 8 and the data of Example 9 and Example 10, it can be found that when content of each substance in the second raw material is within a range further suggested in this application, the brake disc performs better overall. Through comparison between the data of Example 2 and the data of Example 11 and Example 12, it is easy to find that quantities of meshes through which the first raw material and the second raw material are sieved after being crushed also affect performance of the final brake disc. When the quantities of meshes through which the first raw material and the second raw material are sieved after being crushed satisfy parameters further suggested in embodiments of this application, it is more likely to obtain a brake disc that has balanced performance and performs better.

The foregoing descriptions are merely example implementations of this application. It will be noted that a person of ordinary skill in the art may further make several improvements or polishing to them without departing from the principle of this application and the improvements or polishing shall fall within the protection scope of this application.

## Claims

1. A brake disc (1), comprising a dense area (10) and a plurality of nanoporous areas (20) spaced apart in the dense area (10), wherein
the dense area (10) comprises a carbon fiber-reinforced silicon carbide material, the nanoporous area (20) comprises pyrolytic carbon in a continuous phase and carbon particles distributed in the pyrolytic carbon, a pore size of the nanoporous area (20) ranges from 10 nm to 100 nm, and porosity of the nanoporous area (20) ranges from 15% to 30%.

2. The brake disc (1) according to claim 1, wherein a size of the nanoporous area (20) ranges from 30 µm to 500 µm.

3. The brake disc (1) according to claim 1 or 2, wherein based on a volume of the brake disc (1), a sum of volume percentages of the plurality of nanoporous areas (20) ranges from 5% to 30%.

4. The brake disc (1) according to any one of claims 1 to 3, wherein based on total mass of the nanoporous area (20), the nanoporous area (20) comprises 30% to 70% carbon particles, 10% to 40% pyrolytic carbon, and 0% to 50% silicon carbide particles.

5. The brake disc (1) according to claim 4, wherein a mass percentage of the silicon carbide particles in the nanoporous area (20) ranges from 5% to 50%.

6. The brake disc (1) according to any one of claims 1 to 5, wherein a particle size of the carbon particle ranges from 0.1 µm to 10 µm.

7. The brake disc (1) according to any one of claims 1 to 6, wherein a D50 particle size of the carbon particle ranges from 0.3 µm to 10 µm.

8. The brake disc (1) according to claim 4 or 5, wherein a D50 particle size of the silicon carbide particle ranges from 0.3 µm to 20 _{[}tm.

9. The brake disc (1) according to any one of claims 1 to 8, wherein porosity of the brake disc (1) ranges from 1% to 5%.

10. A manufacturing method for a brake disc (1), comprising the following steps:
(1) immersing a carbon fiber tow in a solution of first resin, taking out the carbon fiber tow, and drying, curing, and cutting the carbon fiber tow, to obtain carbon fiber-reinforced resin strips;
(2) heating and pressurizing a first raw material comprising carbon particles and second resin powder in a mold for curing, and then crushing and sieving the first raw material to obtain a granular second raw material;
(3) mixing, heating, and stirring the carbon fiber-reinforced resin strips, the second raw material, third resin powder, and a solvent until the solvent volatilizes, to obtain a mixture; and crushing and sieving the mixture, transferring the mixture to a mold, and heating and pressurizing the mixture for curing, to obtain a brake disc blank, wherein the brake disc blank comprises a first material distribution area and a plurality of second material distribution areas spaced apart in the first material distribution area, the first material distribution area comprises the carbon fiber-reinforced resin strips and the third resin powder, and the second material distribution area comprises the second raw material and the third resin powder; and
(4) performing a carbonization treatment on the brake disc blank under a protective atmosphere, and performing a siliconizing treatment, to obtain the brake disc (1), wherein
the brake disc (1) comprises a dense area (10) and a plurality of nanoporous areas (20) spaced apart in the dense area (10), the dense area (10) comprises a carbon fiber-reinforced silicon carbide material, the nanoporous area (20) comprises pyrolytic carbon in a continuous phase and carbon particles distributed in the pyrolytic carbon, a pore size of the nanoporous area (20) ranges from 10 nm to 100 nm, and porosity of the nanoporous area (20) ranges from 15% to 30%.

11. The manufacturing method according to claim 10, wherein based on total mass of the mixture, the mixture comprises 20% to 50% carbon fiber-reinforced resin strips, 20% to 40% second raw material, and 20% to 40% third resin powder; and
a length of the carbon fiber-reinforced resin strip ranges from 0.5 cm to 3 cm.

12. The manufacturing method according to claim 10, wherein based on total mass of the first raw material, the first raw material comprises 30% to 60% carbon particles, 20% to 50% second resin powder, and 0% to 40% silicon carbide particles.

13. The manufacturing method according to any one of claims 10 to 12, wherein in step (2), sieving is performed by using a sieve with 50 to 400 meshes.

14. The manufacturing method according to any one of claims 10 to 13, wherein in step (3), sieving is performed by using a sieve with 15 to 30 meshes.

15. A braking system, wherein the braking system comprises the brake disc (1) according to any one of claims 1 to 9.

16. A transportation means, wherein the transportation means comprises the braking system according to claim 15.
